(19) Europäisches Patentamt / European Patent Office / Office européen des brevets

(11) **EP 2 884 427 B1**

(12) **EUROPEAN PATENT SPECIFICATION**

(45) Date of publication and mention
of the grant of the patent:
**20.10.2021 Bulletin 2021/42**

(51) Int Cl.:
***G06K 9/46*** *(2006.01)*

(21) Application number: **13382505.9**

(22) Date of filing: **12.12.2013**

(54) **Method and system for describing an image**

Verfahren und System zur Beschreibung eines Bildes

Procédé et système pour décrire une image

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2015 Bulletin 2015/25**

(73) Proprietor: **Fundacion Centro de Tecnologias de
Interaccion
Visual y comunicaciones Vicomtech
20009 San Sebastian (ES)**

(72) Inventors:
• **Garcìa Olaizola, Igor**
  **20009 San Sebastián (ES)**
• **Baradiaran Martirena, Iñigo**
  **20009 San Sebastián (ES)**
• **Quartulli, Marco**
  **20009 San Sebastián (ES)**
• **Flòrez Esnal, Julián**
  **20009 San Sebastián (ES)**
• **Aginako Bengoa, Naiara**
  **20009 San Sebastián (ES)**

(74) Representative: **Balder IP Law, S.L.
Paseo de la Castellana 93
5ª planta
28046 Madrid (ES)**

(56) References cited:
**WO-A1-2009/047471    WO-A1-2009/130451**

• **None**

**Description**

**TECHNICAL FIELD**

The present invention relates to the field of image analysis and, in particular, to methods and systems for describing images in order to enabling comparison of images to detect similarities.

**STATE OF THE ART**

One of the main problems of the digital age is the huge amount of images that are gathered daily. Therefore, making quick efficient searches in databases which store high amounts of multimedia content becomes a must. Thus, efficient methods for searching and retrieving images are required.

Image analysis and characterization tasks used for applications like image search & retrieval, 3D reconstruction, or augmented reality are mainly based on the extraction of *low-level features* as primary information units for its further processes. These features can be obtained either by analyzing specific characteristics of the whole image (global features) or by processing points or areas with relevant information (local features). In other words, apart from globally describing images, an image can also be categorized or described by extracting local information in several positions along its dimensions. This local information is usually represented in form of local descriptors. While image characterization can be performed by using both types of features, some other tasks such as stereo disparity estimation, image stitching, or camera tracking require the detection, description and matching of interest points. Interest points (also called key points) extraction and description mechanisms play a key role during image matching process, where several image points must be accurately identified to robustly estimate a transformation or recognize an object.

Igor Olaizola et al., in "DITEC: Experimental analysis of an image characterization method based on the trace transform", 02/2013, Proceeding of VISAPP 2013, International Conference on Computer Vision Theory and Applications, Barcelona, Spain, Volume 1, analyze the behavior as both a global and a local descriptor of a method to extract efficient global descriptors for domain categorization, based on the trace transform.

European patent EP2126789B1 describes a method and apparatus for representing an image, and a method and apparatus for comparing or matching images based on the trace transform. The disclosed method and apparatus characterize images from global features. The disclosed method is based on performing projections once the trace transform has been applied.

International patent application WO2009/130451A1 discloses a method for obtaining a signature of an image. The method is based on obtaining key points of an image, after which a trace transform is applied to the region associated to each key points. Two additional functionals are subsequently applied: a diametrical functional and optionally a circus functional. Finally, a binary identifier (signature) is obtained by means of a frequency representation. In particular, a function defined as the difference of neighbouring coefficients of the Fourier transform is applied. The binary identifier is extracted by applying a threshold to the resulting vector values ("1" if the difference is above a threshold and "0" if the difference is under that threshold).

International patent application WO2009/047471A1 discloses a method for deriving a representation of an image by processing the image to obtain a three dimensional representation of the image. The performance of the method is improved by ignoring the first bit corresponding to the DC component of the obtained identifier.

**DESCRIPTION OF THE INVENTION**

It is an object of the present invention to provide a method and system capable of efficiently describing an image from local features.

According to an aspect of the present invention, there is provided a method for locally describing an image, comprising:preprocessing (214) an image by applying a low-pass filter to each channel for reducing at least one of the following effects: radiometric noise, geometric quantization or image lattice;extracting (22) a plurality of key points from said image; for each key point, extracting a circular patch of size s which surrounds said key point; for each key point corresponding circular patch, applying a trace transform (231), thus transforming each of said corresponding circular patches into respective bidimensional transformed matrixes, thus obtaining a plurality of rows of values of length of normal (p), wherein the trace transform is geometrically represented by a distance and by an angle ($\phi$) with respect to the extracted key points, said length of normal (p) representing said distance with respect to the corresponding key point;the method being characterized in that if further comprises: applying a frequency transform (241) to each of said rows of values of length of normal (p), thus obtaining, for each row of values of length of normal (p), a row of module values, wherein said module values represent a local descriptor of each key point of said image; eliminating the DC value of each of said module values, thus creating (261) an optimized local descriptor of each key point of the image, the optimized descriptor being formed by said rows of module values from which the respective DC values have been eliminated.

In a preferred embodiment, the length of each created local descriptor is reduced in order to reduce computation complexity. In particular, the number of rows of module values is reduced by combining module values of different rows corresponding to a same frequency into a single module value. The reduction can also be achieved by, for each row of module values, selecting the parameters corresponding to the L lowest frequencies.

In a particular embodiment, the extraction of a plurality of key points from the image is carried out by means of a SIFT algorithm or a SURF algorithm.

A method for comparing images in order to identify images having similar visual content is also provided, which comprises performing the method for describing an image already disclosed, and further comprising comparing the created descriptors with a collection of descriptors stored in a database.

According to another aspect of the invention, it is provided a system for locally describing an image, which comprises:means for preprocessing (214) an image by applying a low-pass filter to each channel for reducing at least one of the following effects: radiometric noise, geometric quantization or image lattice;means for extracting (22) a plurality of key points from said image;means for, for each key point, extracting a circular patch of size s which surrounds said key point;means for, for each key point corresponding circular patch, applying a trace transform (231), thus transforming each of said corresponding circular patches into respective bidimensional transformed matrixes, thus obtaining a plurality of rows of values of length of normal (p), wherein the trace transform is geometrically represented by a distance and by an angle ($\phi$) with respect to the extracted key points, said length of normal (p) representing said distance with respect to the corresponding key point;the system being characterized in that if further comprises:means for applying a frequency transform (241) to each of said rows of values of length of normal (p), thus obtaining, for each row of values of length of normal (p), a row of module values, wherein said module values represent a local descriptor of each key point of said image;means for eliminating the DC value of each of said module values, thus creating (261) an optimized local descriptor of each key point of the image, the optimized descriptor being formed by said rows of module values from which the respective DC values have been eliminated.

A system for matching images is also provided, which comprises the system for locally describing an image and further comprises means for comparing the created descriptors corresponding to the image with a collection of descriptors stored in a database.

Finally, a computer program product comprising computer program instructions/code for performing the method previously described and a computer-readable memory/medium that stores program instructions/code for performing the method previously described, are provided.

Additional advantages and features of the invention will become apparent from the detail description that follows and will be particularly pointed out in the appended claims.

**BRIEF DESCRIPTION OF THE DRAWINGS**

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a block diagram of a system for matching images according to an embodiment of the present invention.

Figure 2 shows a workflow of the method according to an embodiment of the present invention.

Figure 3 shows the geometrical representation of the trace transform.

Figure 4 shows the trace transform contribution mask at very high resolution parameters (image resolution: 100x100px, $n_f$=1000, $n_r$=1000, $n_z$=5000).

Figure 5 shows pixels relevance in trace transform scanning process with different parameters ($n_\phi$, $n_\rho$, $n_\zeta$). Original image resolution = 384x256.

Figure 6 summarizes the creation of descriptors based on the trace transform.

**DESCRIPTION OF A WAY OF CARRYING OUT THE INVENTION**

In this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

The following description is not to be taken in a limiting sense but is given solely for the purpose of describing the broad principles of the invention. Next embodiments of the invention will be described by way of example, with reference to the above-mentioned drawings showing apparatuses and results according to the invention.

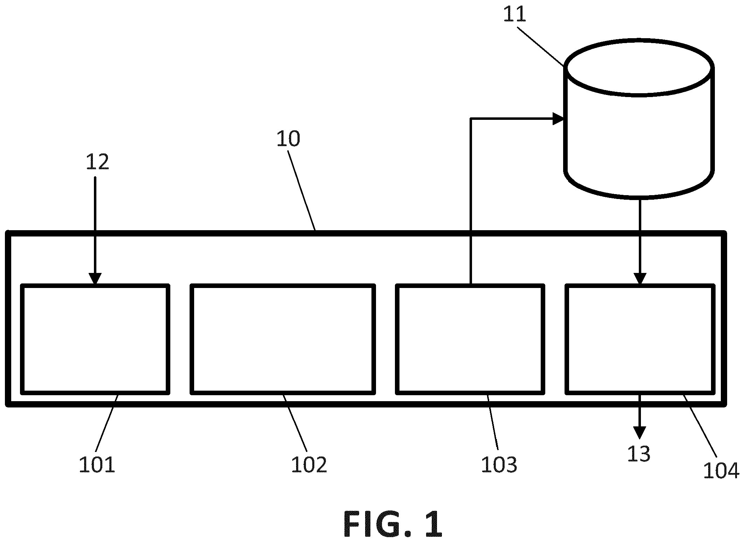

Referring to figure 1, a block diagram of a system for matching images is illustrated. The final goal of the method and system is identifying images which have similar visual content, for which descriptors for key points of an image must be defined. Each descriptor must be robust to affine transformations and to changes in the illumination of images in order to enabling the identification of similar points in different images.

In the context of this invention, the expressions "key point" or "characteristic point", which are interchangeable, refer to a point of interest in the image under evaluation. Key points are not randomly chosen, but taking into account characteristics of the image which make those points interesting (different from neighboring ones in terms of contrast, texture, etc.). Key points are selected by applying specific algorithms for key point detection, which are out of the scope of the present invention.

A "local image descriptor" can be seen as a vector of values representing a region or patch of size s around a detected or selected key point $p$,. The type of data and vector dimensions depend on the nature of the local description algorithm, which is the algorithm used to create that vector and characterize the area around the selected key point. It is remarked that the present invention does not use global image descriptors, which refer to vectors of values representing different features of an image, such as color, shape, regions, textures and motion. The descriptors used in the present invention are local ones.

The system comprises an image retrieval module 10 and a database 11 for storing image descriptors. When it is desired to find images which match a certain image (referred to as "query image") 12, the query image is introduced into an image input and preprocessing unit 101 of the image retrieval module 10. The query image 12 is then preprocessed as described in detail later. Afterwards, the result of that preprocessing stage is taken to an extraction unit 102 of the image retrieval module 10. At this block 102, a plurality of local key points is extracted from the preprocessed image. This is also detailed later. Then descriptors of these key points are created at a creation unit 103. One copy of the created key point descriptors (local descriptors) is stored in the database 11, while another copy is sent to a unit for comparison of image descriptors 104, which is in charge of comparing the received descriptors with the collection of descriptors stored in the database 11. This unit 104 retrieves a result 13 identifying an image (matching image) which matches the query image 12.

In order for the system to be able to correctly search for matching images, an analysis of the images which are introduced in the system must be performed. A method for characterizing the content of the images is used. This method is based on the trace transform. Its goal is to define local descriptors for key points of an image.

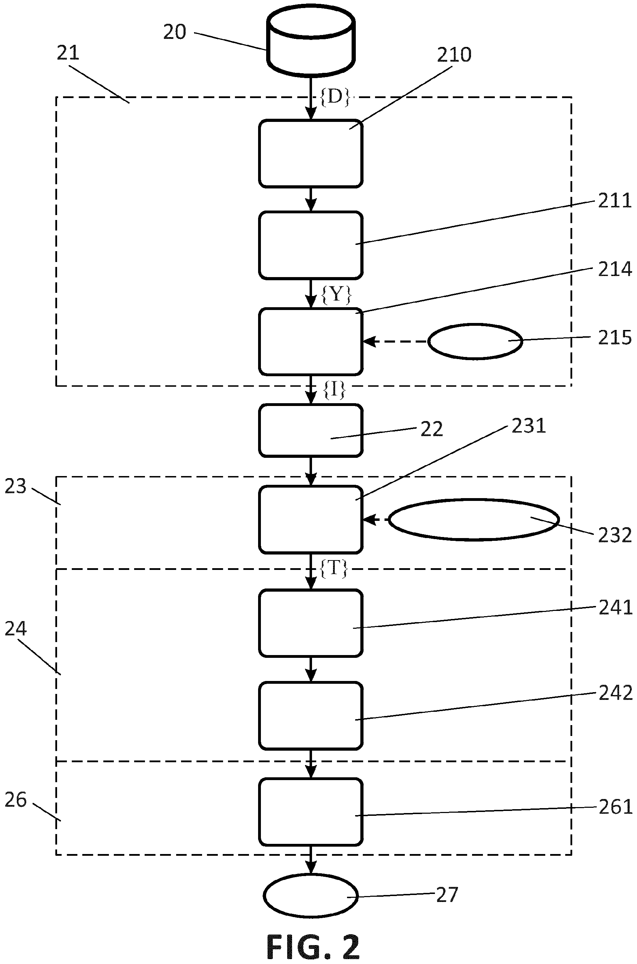

Figure 2 shows a workflow of the inventive method for describing an image. The main steps of the method are: image preprocessing 21, wherein an image is acquired and pre-processed; key points detection 22; data transformation 23, wherein the image contents are extracted by means of a trace transform operation, thus obtaining a two-dimensional signal composed of sinusoidal waves; frequency transformation 24 from the two-dimensional signal; and coefficient extraction 26 to build the descriptors. These steps are described in detail next.

Once an image is loaded (block 210) its key points need to be extracted. Prior to this extraction 22, some pre-processing is applied. In order to reduce effects introduced by at least one of the following: radiometric noise, geometric quantization and image lattice, a low-pass filter is applied to each channel (pre-processing block 214). Some parameters (block 215) are used as input to this pre-processing block 214. The goal of this pre-processing is to eliminate noise in the image, in such a way that the points which are later detected, really identify the image rather than identifying that noise.

The method can be used both with images in gray scale and with images in color. Next a particular embodiment recommended when colored images are used, is described. In that case, color channels are preferably separated and independent descriptors of the image for at least one channel are preferably calculated. In a preferred embodiment, at this stage of pre-processing 21 a transformation of the color space is performed. In particular, the RGB color space is transformed into $YC_bC_r$ (block 211). When this is done, the luminance channel (Y) is processed and used as the most relevant channel to encode shape related features.

Then the key points $x_i$ are extracted. This is achieved by means of conventional algorithms, such as SIFT or SURF. The Scale-Invariant Feature Transform (SIFT) is used to identify locations that are invariant to scale changes of the image, so that they can repeatedly be assigned under differing views of the same object. In order to detect locations that do not change with scale change, a continuous Gaussian function is preferably used. Speeded Up Robust Features (SURF) is partly inspired by the SIFT algorithm, although it is several times faster than the SIFT algorithm. However, it is not as good as SIFT handling large illumination changes. The SURF algorithm bases its detection on the Hessian matrix, using the matrix determinant to determine both the scale and the location of the point.

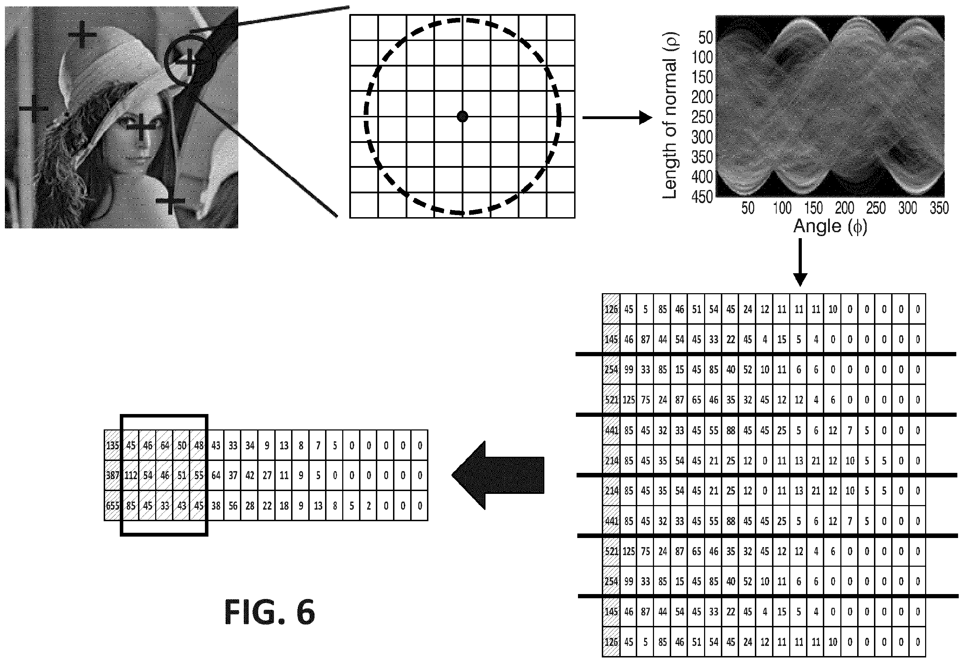

The algorithm used has to be robust to affine invariances and to illumination invariances. Figure 6, which summarizes the creation of local descriptors based on the trace transform, illustrates (first drawing) the key points extracted from a picture.

Once the key points $x_i$ are detected and extracted from the image (block 22 of figure 2), a sub-image which surrounds each key point $x_i$ is extracted. In particular, n image circular patches of size s, proportional to the scale estimated by the point detector, are extracted around each key point $x_i$. The size s of this sub-image n (circular patch) can be defined by the end user. The second drawing of figure 6 illustrates the sub-image or patch which surrounds a key point. The trace transform is later calculated for that sub-image.

Once the sub-image n is extracted, a descriptor of each of said key points $x_i$ need to be defined (local descriptors). That descriptor must enable comparisons between images and the identification of similar points. The creation of descriptors is explained next (stage of data transformation 23 and stage of feature extraction 24).

Once the sub-images n have been extracted, for every sub-image or patch n a trace transform is applied (block 231) in such a way that the sub-image is transformed into a bidimensional function which customizes the sub-image. The trace transform enables a customization of the sub-image which is invariant to rotation, translation and scaling, in such a way that the extracted descriptors fulfill this requirement and enable robust searches.

As referred to in figure 2 and detailed next, some parameters $n_\phi$, $n_\rho$, $n_\xi$, $\xi$ (L) are applied (block 232) to the trace transform (block 231). These parameters are preferably optimized after some training.

The trace transform is a generalization of the Radon transform where the integral of the function is substituted for any other functional $\Xi$. The Radon transform can be expressed as follows:

$$R(\emptyset, \rho) = \iint f(x, y)\delta(x\cos\emptyset + y\sin\emptyset - \rho)dxdy$$

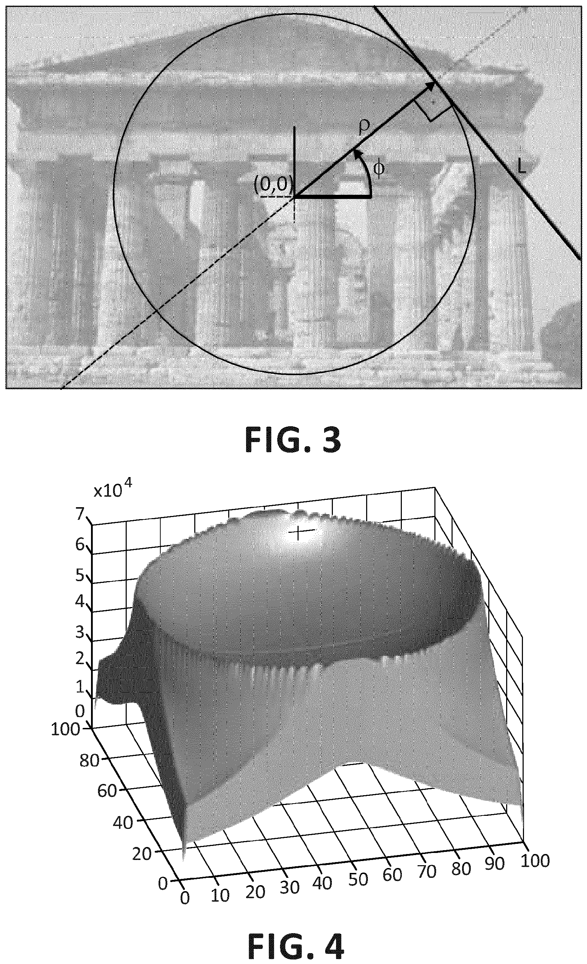

When applying the trace transform, a functional $\Xi$ along a straight line (L in figure 3) is applied. This line is moved tangentially to a circle of radius p covering the set of all tangential lines defined by $\phi$. The trace transform extends the Radon transform by enabling the definition of the functional and thus enhancing the control on the feature space. These features can be set up to show scale, rotation/affine transformation invariance or high discriminance for specific content domains.

The outcome of the trace transform of a 2D image is another 2D signal composed by a set of sinusoidal shapes that vary in amplitude, phase, frequency, intensity and thickness. These sinusoidal signals encode the original image with a given level of distortion depending on the functional and quantization parameters.

Concerning the functionals, a functional $\Xi$ of a function $\xi$ (x) evaluated along the line L will have different properties depending on the features of function $\xi(x)$ (e.g.: invariance to rotation, translation and scaling). The method of the invention uses any well-known functional provided it fulfills the requirements of invariance. Different functionals can have different invariance or sensitiveness properties.

Concerning the geometrical constraints, the main parameter of the trace transform is the functional $\Xi$ while its properties set the invariant behavior of the transform with respect to its invariance in the face of different image transformations. However, there are geometrical parameters that also have a strong effect on the results. These parameters are the three measures of resolution denoted by $\Delta\phi$, $\Delta\rho$, $\zeta(\Delta L)$ for angle, radius and line L respectively.

The final resolution of the image obtained through the trace transform is defined by $n_\phi$ and $n_\rho$ where:

$$n_\phi = \frac{2\pi}{\Delta\phi}$$

$$n_\rho = \frac{\min(X,Y)}{\Delta\rho}$$

with X and Y denoting the horizontal and vertical resolutions of the image $I_l$.

Low ($n_\phi$, $n_\rho$, $n_\zeta$) values have a non-linear downsampling effect on the original image, where $n_\zeta$ is defined as:

$$n_\xi = \frac{1}{\Delta L}$$

The set of points used to evaluate each functional is described (assuming (0,0) as the center of the image) by:

$$L \to y = 2\rho \sin \phi - \frac{x}{\tan \phi}$$

A singularity can be observed at $\phi=0$ and $\phi =\pi$. For these cases it can be assumed that:

$$L \to \begin{matrix} x = \rho & \forall y & if \; \phi = 0 \\ x = -\rho & \forall y & if \; \phi = \pi \end{matrix}$$

The range of the parameters is:

$$\phi \in [0, 2\pi]$$

$$\rho \in [-r, r], r = min\left(\frac{\frac{X}{2}}{\cos \emptyset}, \frac{\frac{Y}{2}}{\sin \emptyset}\right)$$

$$x \in \left\{ \begin{matrix} \left[-\frac{X}{2}, \frac{X}{2}\right] & \forall & \phi \in \left[-\frac{\pi}{4}, \frac{\pi}{4}\right] \cup \left[-\frac{3\pi}{4}, \frac{5\pi}{4}\right] \\ \left[-\frac{\frac{Y}{2}}{\tan \phi}, \frac{\frac{Y}{2}}{\tan \phi}\right] & \forall & \phi \in \left[\frac{\pi}{4}, \frac{3\pi}{4}\right] \cup \left[\frac{5\pi}{4}, \frac{7\pi}{4}\right] \end{matrix} \right\}$$

X and Y are the horizontal and vertical resolutions of the image. The equation which describes the set of points used to evaluate each functional shows a symmetrical result since the same lines are obtained for $\phi \in [0, \pi]$ and $\phi \in [\pi, 2\pi]$. However this is only true for functionals that are not considering the position (like the Radon transform). Depending on the selected functional and on the desired properties of the trace transform (e.g.: rotational invariance), the ranges of $\phi$ and p can be modified to $\phi \in [0, \pi]$ or $[0, r]$ .

As far as the quantization effects are concerned, digital images are affected by two main effects during trace transformation: some pixels might never be used by the functional given the geometrical setup of the transform, and to its integration nature; and there may be some pixels that have much higher cumulated effect than the others into the functional. These effects need to be taken into account in order to preserve of the results the homogeneity, avoiding pixels or areas with higher relevance than others.

Even for very high $(n_\phi, n_\rho, n_\xi)$ values in relation to the original image resolution, the trace transform introduces a contribution intensity map that encodes the relevance of the different regions of the input picture. As shown in figure 4, high resolution values of the trace transform parameters tend to create a convex contribution intensity map. Therefore high parameter values do not necessarily imply optimal image content representation on the trace transform.

High values of $n_\phi$ improve the rotational invariance of the trace transform (although in a manner that is dependent on the selected functional) while very low values $n_\phi < 5$ cannot be considered as producing a valid trace transform since there is not enough angular information.

Ideally, the trace transform should keep the following constraints (considering M as the matrix that contains the number of repetitions of each pixel during the trace transform):

- Coverage: All pixels of the image have to be included at least in one functional. Min(M)>0.
- Homogeneity: All pixels are used the same number of times. Var(M)=0.
- High pixel repetition degree: Each pixel has to be included in as many traces as possible (high values of mean(M)).

Table I shows some example values for coverage, homogeneity and repetition degree at different $n_\phi$, $n_\rho$, $n_\xi$ resolutions (quantization effects of the trace transform):

| $n_\phi$ | $n_\rho$ | nF(L) | % pixels used | Mean | Var |
|---|---|---|---|---|---|
| 64 | 64 | 15 | 16.60 | 0.63 | 15.71 |
| 64 | 64 | 45 | 44.30 | 1.88 | 32.72 |
| 64 | 64 | 85 | 67.53 | 3.54 | 53.61 |
| 64 | 64 | 185 | 93.40 | 7.71 | 52.51 |
| 300 | 5 | 45 | 28.62 | 0.69 | 10.28 |

(continued)

| $n_\phi$ | $n_\rho$ | nF(L) | % pixels used | Mean | Var |
|---|---|---|---|---|---|
| 300 | 5 | 151 | 69.84 | 2.30 | 31.80 |
| 5 | 300 | 45 | 40.59 | 0.68 | 0.20 |
| 5 | 300 | 151 | 88.43 | 2.30 | 0.42 |
| 5 | 300 | 218 | 97.34 | 3.33 | 0.40 |
| 5 | 300 | 251 | 99.18 | 3.83 | 0.30 |
| 384 | 256 | 15 | 83.76 | 15.00 | $1.2 \cdot 10^6$ |
| 100 | 100 | 85 | 85.55 | 8.65 | 872.47 |
| 100 | 100 | 185 | 98.72 | 18.82 | 708.64 |
| 100 | 100 | 218 | 99.55 | 22.18 | 511.61 |
| 100 | 100 | 2,185 | 100.00 | 222.27 | $3.6 \cdot 10^6$ |
| 42 | 75 | 12,000 | 99.77 | 384.52 | $38.6 \cdot 10^6$ |

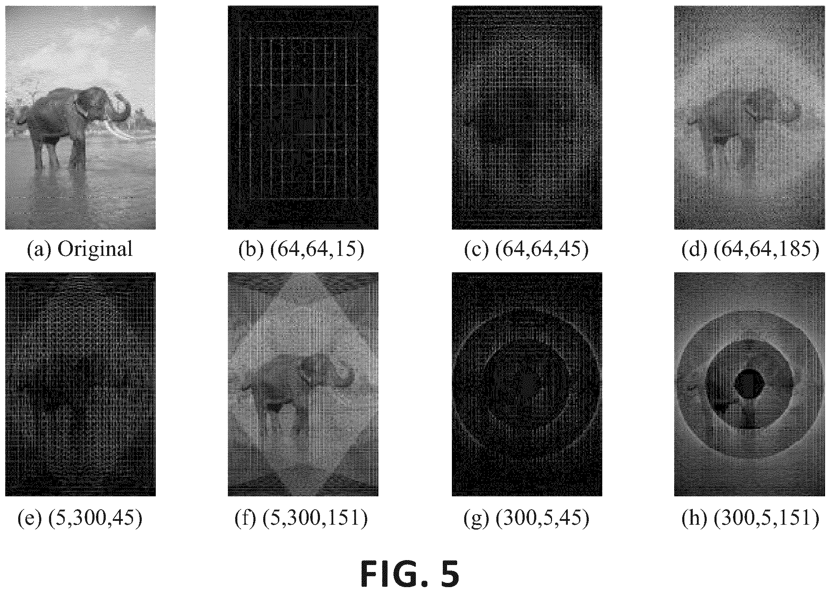

It is noted that best ratios are obtained for lower variations in $\phi$ since the angle is the main factor to increase the variance. The pixel repetition degree is also strongly conditioned by the angular resolution. This fact makes $n_\phi$ the main factor to balance the homogeneity and repetition degree (e.g: low repetition degrees show weaker rotational invariance). Once $n_\phi$ is set, $n_\rho$ can be adjusted to ensure the optimal coverage. $n_\xi$ has an almost asymptotic behavior once the other two parameters are set. Figure 5 shows some cases applied to a real image and the convex contribution intensity mask effect for moderate or higher values of $n_\phi$. In particular, it shows pixels relevance in trace transform scanning process with different parameters ($n_\phi$, $n_\rho$, $n_\xi$). The original image resolution (a) is 384x256.

The third drawing of figure 6 illustrates the 2D function obtained after applying the trace transform. Each point is represented with an angle $\phi$ and a distance p with respect to the key point. Angle $\phi$ and distance p are variable parameters which depend on how many points are going to be analyzed. Once the circular patch is selected, as many distance values (p) as desired can be used (within a maximum distance defined by the radius of the patch). The same applies to angle values ($\phi$): as many angle values ($\phi$) as desired can be used. The amount of distance values (p) and angle values ($\phi$) has a direct impact on the amount of values of the final descriptor: the more detailed information is required, the more values of distance and angle is recommended. However, higher values of distance and angle imply higher computational load.

While the vector which "draws" the graphic of the trace transform is generated, a normalization process occurs. In other words, the trace transform is normalized between 0 and 1 in order to reduce the influence of signal intensity and make the algorithm robust against light intensity variations.

Once the trace transform has been applied (block 231) and normalized (illustrated in the third drawing of figure 6), the resulting bidimensional function which customizes each sub-image enters a block 24 for frequency transformation.

In order to reduce the set of features that are needed to characterize the wave-like signal obtained from the trace transform, a frequency transform is applied (241).

In a preferred embodiment, a Discrete Fourier Transform (DFT) is applied. The DFT distinguishes between module and phase. This enables to obtain a descriptor which is invariant to rotation. In less preferred embodiments other transforms can be used, such as the DCT.

The frequency transform is applied (241) to each of the values of "length of normal (p)" (axis Y) of the Trace Transform bidimensional function (to each of the values of the "rows" of the third picture of figure 6 if the picture is seen as a matrix). In other words, the length of normal (p) represents a distance with respect to the corresponding key point. The length of normal is the normal contained in the circular patch.

The fourth drawing of figure 6 illustrates a table or matrix with the resulting module of a frequency transformed (in this example, the DFT) performed per computed length of normal value (p). Axis X of this table represents the frequencies, which grow from left to right. Due to the radial symmetry of the trace transform and to the frequency symmetry of the DFT, the resulting values (modules) are symmetric both in axis X and in axis Y. For this reason, only half of the rows and half of the columns of the result of the DFT need to be used. The fourth drawing of figure 6 (table) only shows the symmetry in axis X because the symmetric columns (symmetry in axis Y) have already been eliminated. A possible vector of coefficients can be the ones obtained and represented in this table once the symmetry in axis X has been applied (that is to say, once the lower half of the rows has been eliminated).

However, as already explained, the higher the amount of values of the final descriptor is, the higher computational load is required. For this reason, and taking into account that a relative subsampling of descriptor's coefficients can be assumed without altering the performance, in a preferred embodiment, band reduction is added to the already applied symmetry reduction. The resulting descriptor is thus formed by a lower amount of elements or coefficients. Next some possible reductions are explained.

The last drawing of figure 6 illustrates a sequence (vector) of coefficients extracted (block 261) for each horizontal band after band reduction.

In the fourth picture of figure 6, the rows represent the resulting values of each of the frequency transforms (preferably DFT) (one frequency transform per row). Once the frequency transform has been applied, the DC value of the obtained frequency coefficients is preferably eliminated. In figure 6, the DC values are represented by the first column in the fourth and fifth pictures (the columns in grey). The remaining coefficients are sequentially placed, with growing frequencies from left to right ($f_1$ $f_2$...$f_M$). These values (coefficients) constitute the descriptor (block 27) of key points of the image.

In a preferred embodiment, the vector which represents the descriptor is further reduced in size in order to reduce computation complexity. This is represented by block 242 in figure 2:

A) In a possible embodiment, the rows are grouped in bands (several rows per band) and the several rows that form a band are combined into a single row; the elements of the resulting vector (row) are calculated/chosen as desired. They can for example be statistically calculated, for example a mean value.

B) In another possible embodiment, instead of using all the columns, only several columns are used. In this case, the first L columns are preferably selected, whose values represent the L lowest frequencies, L<M. The reason why the lowest frequencies are selected is because the most valuable information of the descriptor is kept in the lower frequencies. The minimum number of selected columns is one (L=1).

C) In a most preferred embodiment, both the number of rows is reduced by grouping several rows into one (case A), and a reduced number of L columns are selected (L<M), preferably choosing the L lowest frequencies ($f_1$ $f_2$...$f_L$) (case C).

The length of the final descriptor (vector) must be chosen to be multiple of the number of rows after the band reduction, in order to keep all the values of a column.

In the exemplary illustration of figure 6 (picture 5), it is shown how the original 12 rows (picture 4) have been reduced to 3 rows (picture 5): a first reduction (from 12 to 6 rows) is due to the symmetry in the axis X and a second reduction (from 6 to 3 rows) is due to the application of the actual band reduction. Besides, in picture 5 the first 5 columns have been selected (after eliminating the DC component in each row). This means that the descriptor in that picture is formed by a vector of 3 x 5 = 15 elements.

The final vector is the result of the stage of coefficient extraction (block 261 in figure 2).

Going back to figure 1, once the image descriptors have been created 103, a comparison 104 among them must be carried out, for determining which images have a greater degree of similarity. This is achieved by computing measurements of the distance between the values of these descriptors. In a preferred embodiment the Euclidean distance is used, but other distances can be used alternatively. The similarity value among different images is obtained taking into account not only the distance values but also the amount of points which are considered to be similar. A data base 11 for storing the descriptors and calculated distances is used.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for locally describing an image, comprising:

- preprocessing (214) an image by applying a low-pass filter to each channel for reducing at least one of the following effects:
radiometric noise, geometric quantization or image lattice;
- extracting (22) a plurality of key points from said image;
- for each key point, extracting a circular patch of size s which surrounds said key point;
- for each key point corresponding circular patch, applying a trace transform (231), thus transforming each of said corresponding circular patches into respective bidimensional transformed matrixes, thus obtaining a plurality of rows of values of length of normal (p), wherein the trace transform is geometrically represented by a distance and by an angle ($\phi$) with respect to the extracted key points, said length of normal (p) representing said distance with respect to the corresponding key point;

the method being **characterized in that** if further comprises:

- applying a frequency transform (241) to each of said rows of values of length of normal (p), thus obtaining, for each row of values of length of normal (p), a row of module values, wherein said module values represent a local descriptor of each key point of said image;
- eliminating the DC value of each of said module values, thus creating (261) an optimized local descriptor of each key point of the image, the optimized descriptor being formed by said rows of module values from which the respective DC values have been eliminated.

2. The method of claim 1, further comprising the step of normalizing said trace transform (241) in order to reduce the influence of signal intensity and make the algorithm robust against light intensity variations.

3. The method of either claim 1 or 2, wherein prior to said preprocessing (214), color channels are separated and independent descriptors of the image for the luminance channel are extracted.

4. The method of any preceding claim, further comprising the step of reducing the length of each created local descriptor in order to reduce computation complexity.

5. The method of claim 4, wherein the number of rows of module values is reduced by combining module values of different rows corresponding to a same frequency into a single module value.

6. The method of either claim 4 or 5, wherein the size of each row of frequency parameters is reduced by selecting the parameters corresponding to the L lowest frequencies.

7. The method of any preceding claim, wherein said step of extracting (22) a plurality of key points from said image is carried out by means of a SIFT algorithm or a SURF algorithm.

8. The method of any preceding claim, wherein said step of applying a frequency transform (241) to each of said rows of values of length of normal ($\rho$) , is done by applying a Discrete Fourier Transform (DFT).

9. A method for comparing images in order to identify images having similar visual content, which comprises performing the method for describing an image according to any preceding claim and further comprising comparing the created descriptors with a collection of descriptors stored in a database (11).

10. A system for locally describing an image, which comprises:

- means for preprocessing (214) an image by applying a low-pass filter to each channel for reducing at least one of the following effects: radiometric noise, geometric quantization or image lattice;
- means for extracting (22) a plurality of key points from said image;
- means for, for each key point, extracting a circular patch of size s which surrounds said key point;
- means for, for each key point corresponding circular patch, applying a trace transform (231), thus transforming each of said corresponding circular patches into respective bidimensional transformed matrixes, thus obtaining a plurality of rows of values of length of normal (p), wherein the trace transform is geometrically represented by a distance and by an angle ($\phi$) with respect to the extracted key points, said length of normal (p) representing said distance with respect to the corresponding key point;

the system being **characterized in that** if further comprises:

- means for applying a frequency transform (241) to each of said rows of values of length of normal (p), thus obtaining, for each row of values of length of normal (p), a row of module values, wherein said module values represent a local descriptor of each key point of said image;
- means for eliminating the DC value of each of said module values, thus creating (261) an optimized local descriptor of each key point of the image, the optimized descriptor being formed by said rows of module values from which the respective DC values have been eliminated.

11. A system for matching images, which comprises the system of claim 10 and further comprises means for comparing the created descriptors corresponding to said image (12) with a collection of descriptors stored in a database (11).

**12.** A computer program product comprising computer program instructions/code for performing the method according to any of claims 1-9.

**13.** A computer-readable memory/medium that stores program instructions/code for performing the method according to any of claims 1-9.


**Patentansprüche**

**1.** Verfahren zur lokalen Beschreibung eines Bilds, umfassend:

- Vorverarbeiten (214) eines Bildes durch Anwenden eines Tiefpass-Filters auf jeden Kanal, um mindestens einen von folgenden Effekten zu reduzieren:
radiometrisches Rauschen, geometrische Quantisierung oder Bildgitter;
- Extrahieren (22) einer Vielzahl von Schlüsselpunkten aus dem Bild;
- für jeden Schlüsselpunkt, Extrahieren eines kreisförmigen Bereichs der Größe s, welcher den Schlüsselpunkt umgibt;
- für jeden Schlüsselpunkt entsprechend dem kreisförmigen Bereich, Anwenden einer Spurtransformation (231), so jeden der entsprechenden kreisförmigen Bereiche in entsprechende zweidimensionale transformierte Matrizen transformierend, so eine Vielzahl von Reihen von Werten einer Länge einer Normalen (p) erhaltend, wobei die Spurtransformation geometrisch durch einen Abstand und durch einen Winkel ($\phi$) bezüglich der extrahierten Schlüsselpunkte dargestellt wird, die Länge der Normalen (p) den Abstand bezüglich des entsprechenden Schlüsselpunktes darstellend; das Verfahren **dadurch gekennzeichnet, dass** es weiter umfasst:
- Anwenden einer Frequenztransformation (241) auf jede der Reihen von Werten der Länge der Normalen (p), so für jede Reihe von Werten der Länge der Normalen (p) eine Reihe von Modulwerten erhaltend, wobei die Modulwerte einen lokalen Deskriptor jedes Schlüsselpunkts des Bilds darstellen;
- Eliminieren des DC-Wertes jedes der Modulwerte, so einen optimierten lokalen Deskriptor jedes Schlüsselpunkts des Bildes erzeugend (261), der optimierte Deskriptor wird durch die Reihen von Modulwerten gebildet, aus denen die jeweiligen DC-Werte eliminiert wurden.

**2.** Verfahren nach Anspruch 1, ferner umfassend den Schritt des Normalisierens der Spurtransformation (241), um den Einfluss der Signalintensität zu verringern und den Algorithmus robust gegenüber Variationen der Lichtintensität zu machen.

**3.** Verfahren nach entweder Anspruch 1 oder 2, bei welchem vor dem Vorverarbeiten (214) Farbkanäle getrennt werden und unabhängige Deskriptoren des Bildes für den Luminenzkanal extrahiert werden.

**4.** Verfahren nach einem der vorhergehenden Ansprüche, ferner umfassend den Schritt des Reduzierens der Länge jedes erzeugten lokalen Deskriptors, um die Berechnungskomplexität zu verringern.

**5.** Verfahren nach Anspruch 4, bei welchem die Anzahl der Reihen von Modulwerten durch Kombination von Modulwerten verschiedener Reihen, entsprechend einer gleichen Frequenz, zu einem einzelnen Modulwert reduziert werden.

**6.** Verfahren nach entweder Anspruch 4 oder 5, bei welchem die Größe jeder Reihe von Frequenzparametern reduziert wird, indem die Parameter ausgewählt werden, welche den L niedrigsten Frequenzen entsprechen.

**7.** Verfahren nach einem der vorhergehenden Ansprüche, bei welchem der Schritt des Extrahierens (22) einer Vielzahl von Schlüsselpunkten aus dem Bild mittels eines SIFT-Algorithmus oder eines SURF-Algorithmus durchgeführt wird.

**8.** Verfahren nach einem der vorhergehenden Ansprüche, bei welchem der Schritt des Anwendens einer Frequenztransformation (241) auf jede der Reihen von Werten der Länge der Normalen (p) durch Anwenden einer diskreten FourierTransformation (DFT) erfolgt.

**9.** Verfahren zum Vergleichen von Bildern, um Bilder mit ähnlichem visuellen Inhalt zu identifizieren, umfassend das Durchführen des Verfahrens zum Beschreiben eines Bildes nach einem der vorhergehenden Ansprüche und ferner umfassend Vergleichen der erzeugten Deskriptoren mit einer Sammlung von Deskriptoren, gespeichert in einer Datenbank (11).

**10.** System zur lokalen Beschreibung eines Bildes, welches umfasst:

- Mittel zur Vorverarbeitung (214) eines Bildes durch Anwenden eines Tiefpass-Filters in jedem Kanal, um mindestens einen der folgenden Effekte zu reduzieren:
radiometrisches Rauschen, geometrische Quantisierung oder Bildgitter;
- Mittel zum Extrahieren (22) einer Vielzahl von Schlüsselpunkten aus dem Bild;
- Mittel zum, für jeden Schlüsselpunkt, Extrahieren eines kreisförmigen Bereichs der Größe s, welche den Schlüsselpunkt umgibt;
- Mittel zum, für jeden Schlüsselpunkt entsprechenden kreisförmigen Bereich, Anwenden einer Spurtransformation (231), so jeden der entsprechenden kreisförmigen Bereiche in jeweilige zweidimensionale transformierte Matrizen transformierend, so eine Vielzahl von Reihen von Werten einer Länge einer Normalen (p) erhaltend, bei welcher die Spurtransformation geometrisch durch einen Abstand und durch einen Winkel (ϕ) bezüglich der extrahierten Schlüsselpunkte dargestellt wird, wobei die Länge der Normalen (p) den Abstand bezüglich des entsprechenden Schlüsselpunktes darstellt;

das System **dadurch gekennzeichnet, dass** es ferner umfasst:

- Mittel zum Anwenden einer Frequenztransformation (241) auf jede der Reihen von Werten der Länge der Normalen (p), so für jede Reihe von Werten der Länge der Normalen (p) eine Reihe von Modulwerten erhaltend, bei welchen die Modulwerte einen lokalen Deskriptor jedes Schlüsselpunkts des Bildes darstellen;
- Mittel zum Eliminieren des DC-Wertes jedes der Modulwerte, so einen optimierten lokalen Deskriptor jedes Schlüsselpunkts des Bildes erzeugend (261), wobei der optimierte Deskriptor durch die Reihen von Modulwerten gebildet wird, aus welchen die jeweiligen DC-Werte eliminiert worden sind.

**11.** System zum Vergleichen von Bildern, welches das System nach Anspruch 10 umfasst und ferner umfasst Mittel zum Vergleichen der erzeugten Deskriptoren, entsprechend dem Bild (12) mit einer Sammlung von Deskriptoren, gespeichert in einer Datenbank (11).

**12.** Computerprogrammprodukt, umfassend Computerprogrammanweisungen/code zum Durchführen des Verfahrens nach einem der Ansprüche 1-9.

**13.** Computerlesbarer Speicher/Medium, speichernd Programmanweisungen/code zum Durchführen des Verfahrens nach einem der Ansprüche 1-9.

**Revendications**

**1.** Procédé de description locale d'une image, comprenant :

- le prétraitement (214) d'une image en appliquant un filtre passe-bas à chaque canal pour réduire au moins l'un des effets suivants :
un bruit radiométrique, une quantification géométrique ou une grille d'image ;
- l'extraction (22) d'une pluralité de points clés de ladite image ;
- pour chaque point clé, l'extraction d'un timbre circulaire de taille s qui entoure ledit point clé ;
- pour chaque timbre circulaire correspondant de point clé, l'application d'une transformée de trace (231), transformant ainsi chacun desdits timbres circulaires correspondants en matrices transformées bidimensionnelles respectives, obtenant ainsi une pluralité de rangées de valeurs de longueur de normale (p), dans lequel la transformée de trace est représentée géométriquement par une distance et par un angle (Φ) par rapport aux points clés extraits, ladite longueur de normale (p) représentant ladite distance par rapport au point clé correspondant ;

le procédé étant **caractérisé en ce qu'**il comprend en outre :

- l'application d'une transformée de fréquence (241) à chacune desdites rangées de valeurs de longueur de normale (p), obtenant ainsi, pour chaque rangée de valeurs de longueur de normale (p), une rangée de valeurs de module, dans lequel lesdites valeurs de module représentent un descripteur local de chaque point clé de ladite image ;
- l'élimination de la valeur DC de chacune desdites valeurs de module, créant (261) ainsi un descripteur local optimisé de chaque point clé de l'image, le descripteur optimisé étant formé desdites rangées de valeurs de module d'où les valeurs DC respectives ont été éliminées.

2. Procédé selon la revendication 1, comprenant en outre l'étape de normalisation de ladite transformée de trace (241) afin de réduire l'influence d'intensité de signal et rendre l'algorithme robuste vis-à-vis de variations d'intensité de lumière.

3. Procédé selon la revendication 1 ou 2, dans lequel avant ledit prétraitement (214), des canaux de couleur sont séparés et des descripteurs indépendants de l'image pour le canal de luminance sont extraits.

4. Procédé selon l'une quelconque des revendications précédentes, comprenant en outre l'étape de réduction de la longueur de chaque descripteur local créé afin de réduire une complexité de calcul.

5. Procédé selon la revendication 4, dans lequel le nombre de rangées de valeurs de module est réduit en combinant des valeurs de module de rangées différentes correspondant à une même fréquence en une seule valeur de module.

6. Procédé selon la revendication 4 ou 5, dans lequel la taille de chaque rangée de paramètres de fréquence est réduite en sélectionnant les paramètres correspondant aux L fréquences les plus basses.

7. Procédé selon l'une quelconque des revendications précédentes, dans lequel ladite étape d'extraction (22) d'une pluralité de points clés de ladite image est réalisée au moyen d'un algorithme SIFT ou d'un algorithme SURF.

8. Procédé selon l'une quelconque des revendications précédentes, dans lequel ladite étape d'application d'une transformée de fréquence (241) à chacune desdites rangées de valeurs de longueur de normale (p), se fait en appliquant une transformée de Fourier discrète (DFT).

9. Procédé de comparaison d'images afin d'identifier des images ayant un contenu visuel similaire, qui comprend la réalisation du procédé de description d'une image selon l'une quelconque des revendications précédentes et comprenant en outre la comparaison des descripteurs créés avec une collection de descripteurs stockée dans une base de données (11).

10. Système de description locale d'une image, qui comprend :

   - des moyens de prétraitement (214) d'une image en appliquant un filtre passe-bas à chaque canal pour réduire au moins l'un des effets suivants : un bruit radiométrique, une quantification géométrique ou une grille d'image ;
   - des moyens d'extraction (22) d'une pluralité de points clés de ladite image ;
   - des moyens, pour chaque point clé, d'extraction d'un timbre circulaire de taille s qui entoure ledit point clé ;
   - des moyens, pour chaque timbre circulaire correspondant de point clé, d'application d'une transformée de trace (231), transformant ainsi chacun desdits timbres circulaires correspondants en matrices transformées bidimensionnelles respectives, obtenant ainsi une pluralité de rangées de valeurs de longueur de normale (p), dans lequel la transformée de trace est représentée géométriquement par une distance et par un angle ($\Phi$) par rapport aux points clés extraits, ladite longueur de normale (p) représentant ladite distance par rapport au point clé correspondant ;

   le système étant **caractérisé en ce qu'**il comprend en outre :

   - des moyens d'application d'une transformée de fréquence (241) à chacune desdites rangées de valeurs de longueur de normale (p), obtenant ainsi, pour chaque rangée de valeurs de longueur de normale (p), une rangée de valeurs de module, dans lequel lesdites valeurs de module représentent un descripteur local de chaque point clé de ladite image ;
   - des moyens d'élimination de la valeur DC de chacune desdites valeurs de module, créant (261) ainsi un descripteur local optimisé de chaque point clé de l'image, le descripteur optimisé étant formé desdites rangées de valeurs de module d'où les valeurs DC respectives ont été éliminées.

11. Système de mise en concordance d'images, qui comprend le système de la revendication 10 et comprend en outre des moyens de comparaison des descripteurs créés correspondant à ladite image (12) avec une collection de descripteurs stockée dans une base de données (11).

**12.** Produit-programme d'ordinateur comprenant des instructions/un code de programme d'ordinateur pour réaliser le procédé selon l'une quelconque des revendications 1 à 9.

**13.** Mémoire/support lisible par ordinateur qui stocke des instructions/un code de programme pour réaliser le procédé selon l'une quelconque des revendications 1 à 9.

**FIG. 1**

**FIG. 2**

# FIG. 3

# FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2126789 B1
- WO 2009130451 A1
- WO 2009047471 A1

**Non-patent literature cited in the description**

- **IGOR OLAIZOLA et al.** DITEC: Experimental analysis of an image characterization method based on the trace transform''. *Proceeding of VISAPP 2013, International Conference on Computer Vision Theory and Applications,* February 2013, vol. 1